Europäisches Patentamt

European Patent Office

Office européen des brevets

(19)

(11) Publication number: **0 367 544**
**A2**

## (12) EUROPEAN PATENT APPLICATION

(21) Application number: 89311206.0

(51) Int. Cl.5: **G05B 13/02**

(22) Date of filing: 30.10.89

(30) Priority: 31.10.88 CA 581737

(43) Date of publication of application:
09.05.90 Bulletin 90/19

(84) Designated Contracting States:
CH DE ES FR GB IT LI NL SE

(71) Applicant: **INTERNATIONAL DEVELOPMENT
RESEARCH CENTRE**
**250, Albert Street P.O. Box 8500**
**Ottawa Ontario K1G 3H9(CA)**

(72) Inventor: **Fleet, Bernard**
**11 Olive Avenue**
**Toronto, Ontario M6G 1T7(CA)**
Inventor: **Gunasingham, Haritharan**
**522 East Coast Road, Nr. 06-01**
**Singapore 1545(SG)**
Inventor: **Wong, Mun Leong**
**3 College Green**
**Singapore 1129(SG)**
Inventor: **Seow, Jimmy Kim Leng**
**Blk. 610, Nr. 10-210, Clementi West Street 1**
**Singapore 0512(SG)**

(74) Representative: **Austin, Hedley William et al**
**Urquhart-Dykes & Lord Alexandra House 1**
**Alexandra Road**
**Swansea West Glamorgan SA1 5ED(GB)**

(54) **Process control using intelligence-based systems.**

(57) A method is provided of designing a monitoring and control system for laboratory and industrial process applications. The method consists of specifying the instruments and controllers to be used for monitoring and control using a graphics and natural language interface, linking the graphical description of the instruments and controllers to the external instruments and controllers through an electronic interface, building an expert system knowledge base for supervising the control of the process or laboratory experiment, defining the inference engine which actually runs the process or experiment, and using the graphics and natural language interface to query the system in real time. Apparatus incorporating this method is also provided.

## BACKGROUND OF THE INVENTION

The invention relates to the use of intelligence-based systems to plan and control processes involving scientific instrumentation, and more particularly to a method and apparatus for use in teaching and in research and industrial applications.

Advanced computer systems that emulate reasoning tasks are known as "intelligent systems". These systems include an inference engine which interprets machine readable intelligence stored in an "intelligence base". Such systems are becomig more and more useful as programs are developed to handle problems which require diagnosis, recommended actions, selection or classification of data. These problems have in the past been solved by human experts and it is becoming more commonly understood that if the domain of the intelligence base, or in other words the scope of the problem, is sufficiently narrow and provided that a sufficiently large body of intelligence is properly encoded in the intelligence base, then the system can achieve performance which at least matches the ability of a human expert and in some instances exceeds it. These intelligent systems are known as "expert systems".

The initial step in building an intelligent system is to encode intelligence from conventional sources such as human experts and technical libraries into a machine readable intelligent system language.

In particular, when designing a system in a particular domain, the vocabulary and structure of the domain, judgmental intelligence of the domain, and the method by which a user can access the intelligence base must be determined. The vocabulary and structure of the domain must be defined both in general and with respect to the particular problem that the intelligent system will address. The individual objects and ideas in the domain must be encoded in the intelligence base and the structure of the domain refer to the relationships between the objects and the ideas in a domain. The judgemental intelligence of the domain refers to the rules of thumb (heuristics) or rules of inference which are used by a human expert to solve a problem involving uncertain intelligence, or to restrict the scope of relevant intelligence, or to direct a search for solutions among various possibilities covered by the intelligence base.

The user of an intelligent system typically accesses intelligence in the system through a consultation. This requires a human/machine interface and it is important that the consultation occurs in a manner that ensures that the use of the intelligence in the base is being considered properly and then applied. It is particularly important for example, that the user is not asked for redundant information.

For the user it is clearly essential that the system be readily understood and accessible, preferably with as little understanding of how the system operates as possible. Ideally the interface will present a format which is readily understood by the user without undue uncertainty and the need for special intelligence.

The present invention is intended to make use of an intelligent system to provide for intelligent planning and control of scientific instrumentation in teaching, research and industrial applications. The use of scientific instrumentation has been linked to personal computers for laboratory experimentation and industrial applications and has been gaining some considerable importance in the market place. Such systems tend to be dedicated and typically involves a single personal computer (PC) which is linked to the instrumentation for the purposes of acquiring data from the instrumentation and manipulating that data under the control of the PC. Software has been developed and electronic interfaces provided between the PC and the scientific instrumentation to tailor the system specifically to a particular application.

Clearly there is a need for general purpose hardwaer and software which will allow scientific and laboratory experimentation to be done. Packages are available to permit PCs to be linked to a variety of intruments but the packages have no intelligence and only allow the user to monitor and then transform data from the instrument. This transformation may include manipulation such as bar graphs, tabulation, etc. For instance a data logger could be coupled to a PC to enable acquisition of data from analog sensors and devices, the data sorted and then manipulated under the control of the software to develop a particular output format.

An example of a general purpose package of this kind has been developed by National Instruments of the U.S.A.. The package includes software that enables the user to connect instruments to microcomputers, such as the IBM PC or Apple McIntosh, and monitor the output signals of these instruments. The signals are stored as digital data in the main computer memory or on associated magnetic disk and can be fetched for transformation into predefined formats and the results stored or plotted in graphical form.

The acceptance of PCs in the use of scientific process control, and the advancement of intelligent systems leads to an interest in developing an intelligent system capable of providing diagnostic outputs.

An advanced prior art system for monitoring and diagnosing process systems configures a computer as an expert system having a user interface, a knowledge base, and an inference engine. The knowledge base is in the form of a list of domain-specific rules and the inference engine operates under the control of domain-independent meta rules (i.e. rules about rules) and procedural rules which select which meta rules to apply where there is a choice. The meta rules and procedural rules are used to construct a rule network from the knowledge base so that the system is able to determine malfunctions in the process and to provide diagnostic capability. Such an inference engine is explicitly derived from the meta rules and is highly deterministic. Moreover the domain specific rules are distinctly separate from the meta and procedural rules.

These prior art intelligent computer systems for process monitoring have neglected the user interface. The emphasis has been in the development of expert system capabilities including the structure of the knowledge base and the inference engine. Even the most sophisticated expert system is worthless if the intended user can not communicate with it. At its simplest level, the user must be permitted to describe to the system the problem to be addressed, and the system must respond with its recommendations. Although the designers of expert systems have a great deal of experience with computers, the intended users of expert systems are frequently not computer analysts. Clearly the systems are of more benefit to users who are less expert. It is therefore critical to ensure that an expert system is easy to use and for this reason, more and more the user interface is making use of natural languages. This allows the user to communicate with the system in ordinary English (or any other chosen language) and to enable the computer to respond in the same language. This is done of course within the confines of a dictionary defined for the domain and in some instances the syntax to be used with the wording must be learned.

When considering the use of intelligent systems in planning and control of scientific instrumentation in teaching, research and industrial application, clearly natural language interfacing has its limitations. The user is thinking in terms of equipment, connecting the equipment in scientific experimentation or control systems, and revising these systems to perform different experiments. The mind set is therefore the systems and processes in a graphical format, in a symbolic way. For the interface to be as simple as possible, there should be a match for this thinking.

To date, previous intelligent computer systems have been written in procedural language such as C or LISP. Such procedural languages have several disadvantages. Most significant is the fact that procedural languages solve problems by specifying step by step how a problem should be solved. The difficulty is when the precise number of steps leading to the solution are not known. An alternative to this combinatorial problem is to encode the knowledge base in a form of pattern invoked programs which are activated by the control structure whenever the data fulfil certain conditions. Whereas a procedural language can conceivably be used to structure a pattern-invoked program, it must be explicitly defined for this purpose in each case. By contrast a number of unique features are afforded by Prolog that have not direct analogs in othe languages. These arise from Prolog's origins in logic and include the following:
- declarative
- autonomous control of search
- independence of logic and control
- built in pattern matching
- modularization.

## SUMMARY OF THE INVENTION

This invention is intended to provide a low cost PC-based instrumentation package for application to a laboratory experimentation, quality control and industrial process control. The invention integrates expert system capability with graphics design and instrument and process monitoring in control preferably using Prolog and a frame representation scheme.

A further objective of the invention is to provide an intelligent graphics and natural language interface that enables the user of a mouse to design and configure external instruments and controllers for a particular application. Several instruments and controllers can be linked together for an application and a key feature of the graphics and natural language interface is that the process schematics in the form of icons can be linked directly to the external instruments and controllers.

A further objective is to provide a general-purpose electronic interface that both enables the PC to monitor and control external instruments and processes and also enables external instruments and controllers to be linked together through assignments made at the design and planning interface.

Also, it is intended to provided an expert system shell for the control of the process that is able to reason about uncertain instrument data and provide control decisions. The system shell (in contrast with previous expert systems use in process monitoring) is preferably implemented in Prolog using a frame representation scheme and a knowledge base which is non-deterministic and contains only the logic of the process. The actual control is however, directed by the inference engine which selects and fires the relevant frames at the appropriate time. The key feature of the design is that the inference mechanism while being deterministic in runtime can be altered by the user through the graphics-natural language interface.

The invention is also intended to enable the user to modify the knowledge base by adding or deleting Prolong statements from the knowledge base through the natural language interface. Further, the invention provides an interactive environment for the user to interrogate the system to ascertain the status of the experimental process in real-time.

## BRIEF DESCRIPTION OF DRAWINGS

Fig. 1 is a block diagram illustrating the configuration of software or a particular application of the invention and represents a preferred embodiment of the software;

Fig. 2 is a block diagram representing the hardware elements of the preferred embodiment of the invention;

Fig. 3 illustrates the component parts of the computer-aided design (CAD) module;

Fig. 4 illustrates typical VDT window displays and files used to store parts of the process schematics;

Fig. 5 is a table of program statements;

Fig. 6 illustrates in more detail a typical file drawing of an autotitrator;

Fig. 7 is another file, in this case illustrating a glucose monitoring application;

Fig. 8 is a block diagram illustrating component part of the process control management (PCM) module;

Fig. 9 is a block diagram illustrating the linking mechanism of the PCM module in updating a frame-based knowledge base;

Fig. 10 is another table of program statements;

Fig. 11 is a graph for calibrating a thermistor and showing reference points used to define the thermistor;

Fig. 12 is a block diagram illustrating component parts of the inference engine module (IEM) ;

Fig. 13 is a display of an inference engine graphics interface;

Fig. 14 is a block diagram representing an IEM natural language interface (IEMNAL);

Fig. 15 is a graphical representation of a simulated model; and

Fig. 16 is a table of more programming statements.

## DESCRIPTION OF PREFERRED EMBODIMENT

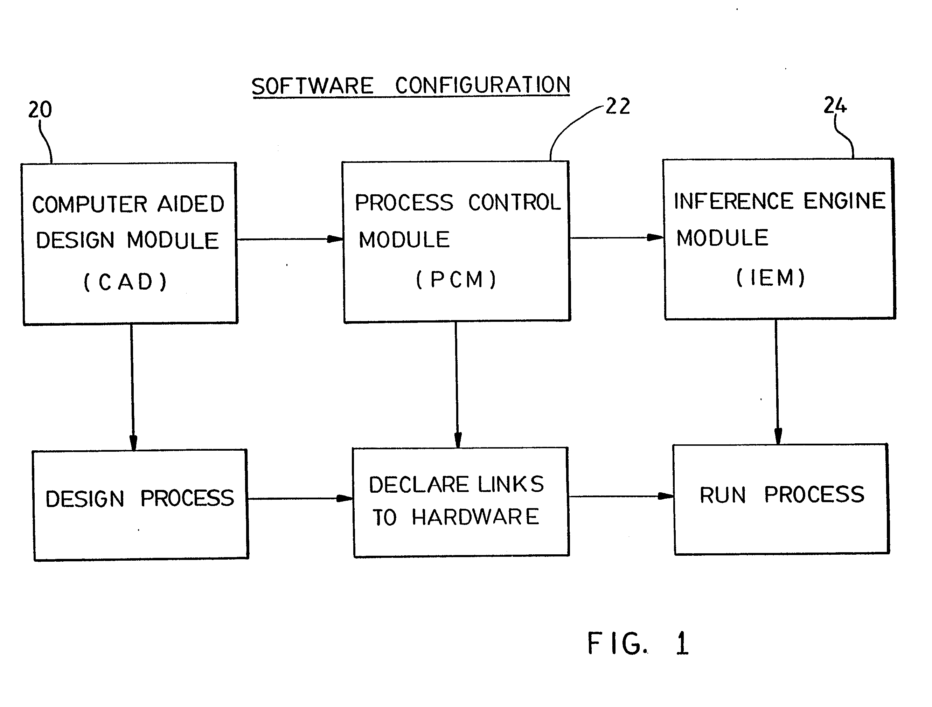

Reference is made firstly to Fig. 1 which illustrates in block diagram form the core software which is preferably written in Turbo Prolog, a fifth generation programming language which is transparent to the user. However, other languages could be used such as LISP.

The core software is separated into three distinct modules, a computer-aided design module (CAD) 20, a process control manage module (PCM) 22, and an inference engine module (IEM) 24. As will be confirmed, the module 20 is used to design the process control schematics either from standard modules representing items such as valves, sensors, etc., or they can be drawn specially using a mouse. The links between the various icons developed by the module 20 is done by the PCM module 22 and the key to this linking process is the use of a frame representation scheme to store the operational characteristics of the specific devices or systems associated with the icons. These characteristics include deterministic routines that direct the protocol for the operation of the devices, known as procedures, hardware drivers that actual control the devices, heuristics that are brought to bear when decisions have to be made in regard to when and how to operate the device, in facts or working parameters. An icon can have more than one frame associated with it and these are all stored in the knowledge base.

After declaring the control strategy of the process, the IE module 24 is used to execute and perform controls of the process used in the heuristics that are declared in the knowledge base.

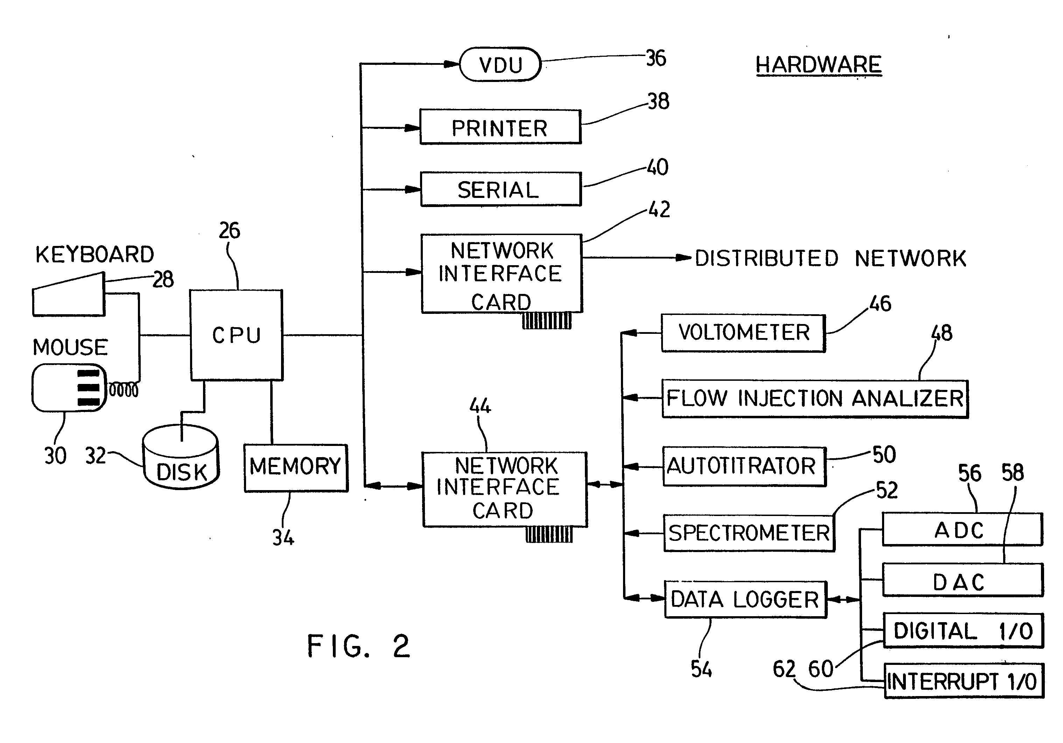

Reference is next made to Fig. 2 which represents the hardware environment in which the software is used. A micro processor 26 is associated with keyboard 28 and mouse 30, a disk storage media 32, and memory 34. A video display unit (VDU) 36, printer 38, serial card 40, network interface card 42 and interface card 44 all form part of the central hardware system. The network card `interfaces between the micro computer bus and other microcomputers or microprocessor-based instruments to exchange data and information in distributed control applications. The hardware interface card 44 is also connected to the PC bus and allows external scientific instruments to be interfaced with the micro computer.

Typical instruments used in this exemplary embodiment of the invention include a voltameter 46, flow injection analyser 48, autotitrator 50, spectrometer 52 and a data logger 54 which has analog to digital channels (ADC) for interfacing with analog type transducers, digital to analog channels (DAC) to control analog type actuators, and input and output digital lines and interrupt control lines. All of the devices coupled to the interface card 44 can be removed from the main system and distributed around the chemical process to log data from that process and feed the data to the main system. Clearly the form of the various devices can change depending upon the process being monitored and the type of scientific devices necessary to monitor the process.

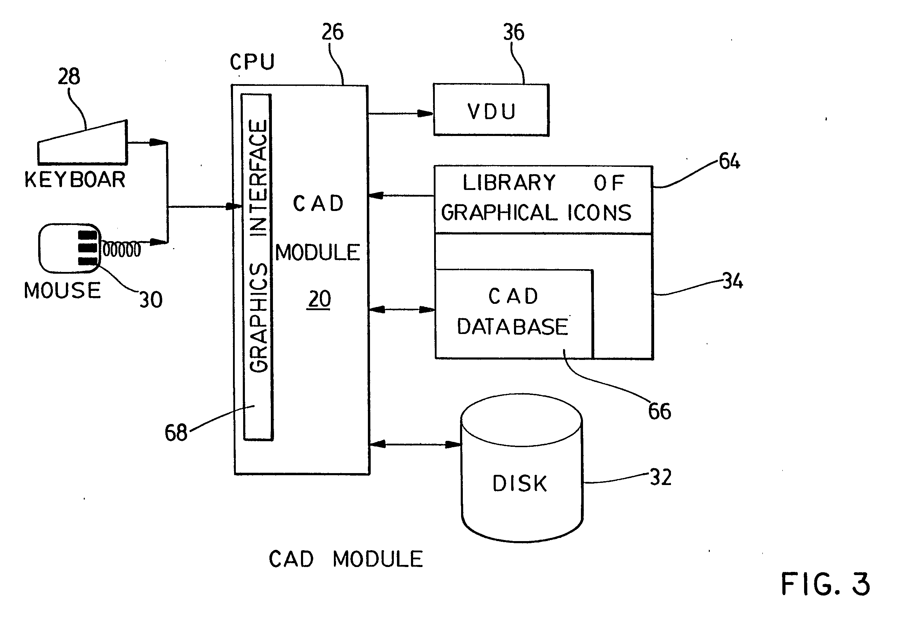

Next, reference is made to Fig. 3 which illustrates the CAD module and how it is used to design schematics of the process application. To run the CAD module, the program must first be loaded into the memory of the micro computer 26 from the disk storage media 32. The memory 34 associated with the microprocessor 26 stores a library of graphical icons 64 and a CAD data base 66 and the microprocessor includes a graphics interface 68 to support the use of the mouse for drawing and designing new icons. To produce an icon on the VDU, the mouse is first used to point to the icon stored in the library of icons 64 and then the mouse is used to select a position on the VDU where the icon is to be placed. The graphics interface 68 provides editing features for the user to edit the position, colour and size of the icon.

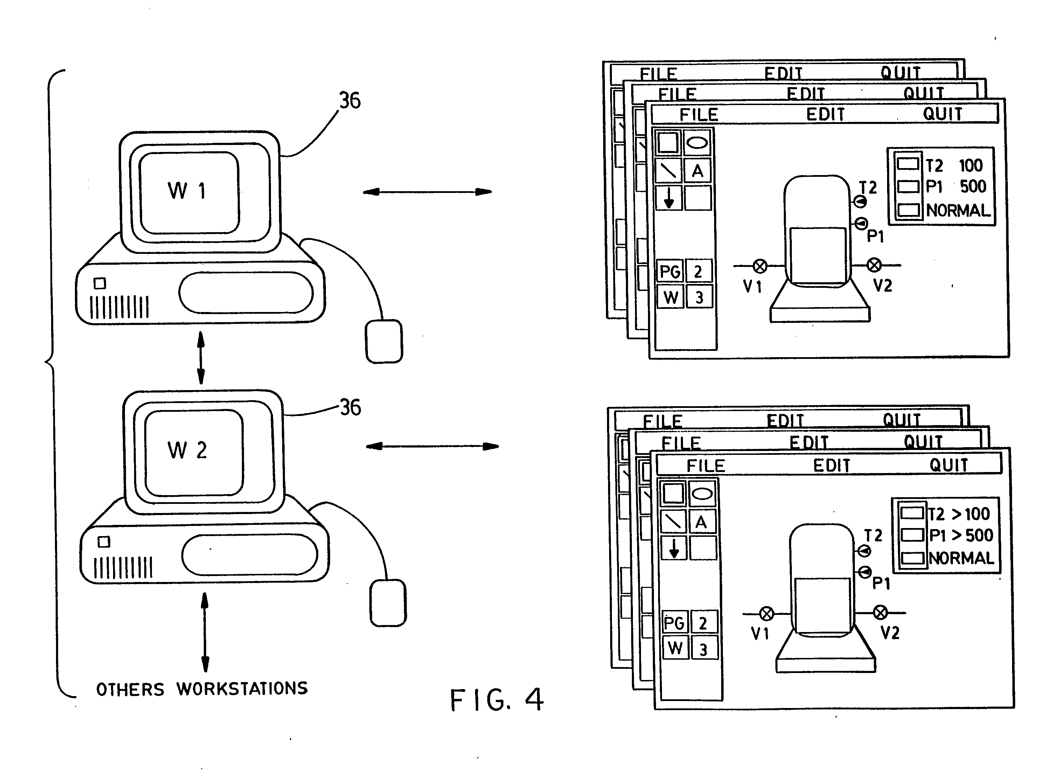

The unique feature of the CAD graphics interface is that the paging co-ordinate system allows large complex processors to be separated into smaller modular windows such as the windows illustrated in Fig. 4. Each window is referenced by its work station number in the network and a page number. The system would typically have 24 work stations and each work station can call up 24 pages of graphics screens. Consequently, as many as 24 by 24 graphic screens can be used to configure a distributed control process. Using the paging co-ordinate system, the user can shift from one window to another by changing either the work station or page number using the mouse and thus the user needs to have access to only one microcomputer or work station to design the entire schematics. In an example shown in Fig. 4, two of the work stations are numbered as shown and both of them have called up a window referenced as page 2 from a work station number 3 not shown in the drawing. This figure also illustrates the multiple window aspects of the system. It will be evident that the user, if given access to only one work station in the system, is then able to design the entire schematics by selecting the windows he requires.

Upon finishing the drawing and designing the schematics of the process, the graphics designs can be saved on disk and referenced by a unique file name. The file can be retrieved and the schematics updated if any amendments are required.

The icons that make up the process schematics are declared in Prolog using the following general structure:

Domain

```
filename, name = string
ws, page, r, c, color, fill, seq, layer ind = integer
drawing = p(r,c);
drawings = drawing*
type = bx(r,c,r,c,fill,color);
defn(r,c,r,c,fill,color);
ruler(r,c,r,c,fill,color);
text(r,c,r,c,fill,color);
pen(r,c,r,c,fill,color,drawings);
polygon(r,c,r,c,fill,color,drawings);
```

Database

```
background(ws,page,filename)
obj(ws,page,seq,layer,name,type,ind)
where
```

5

ws = logical workstation number
page = logical page of workstation
filename = bit-mapped background image for window store
in filename
seq = unique sequence number
layer = layering of icon either top or bottom
name = unique name of object icon
type = graphics structure of icon
ind = indicator to represent whether the icon is active
being deleted

The CA, PC and IE modules are preferably written in Turbo Prolog produced by Borland International of California. Turbo Prolog programs consist essentially of four sections, namely: domains, predicates, a data base, and goals. The domain section specifies the types of values that can be used for the objects that are part of each predicate and the predicates section defines the names and relations that are known to exist between objects. The data base contains special predicates that can be edited or retracted from the data base using the assert (fact) and retract (fact) instructions respectively. The goals section contains control clauses that can direct a solution. Goals can be input from the keyboard or can be made part of the program. Details of the Turbo Prolog implementation can be found in the Borland operating manual and in several text books on the subject. It will be evident however, that other languages such as LISP can also be used.

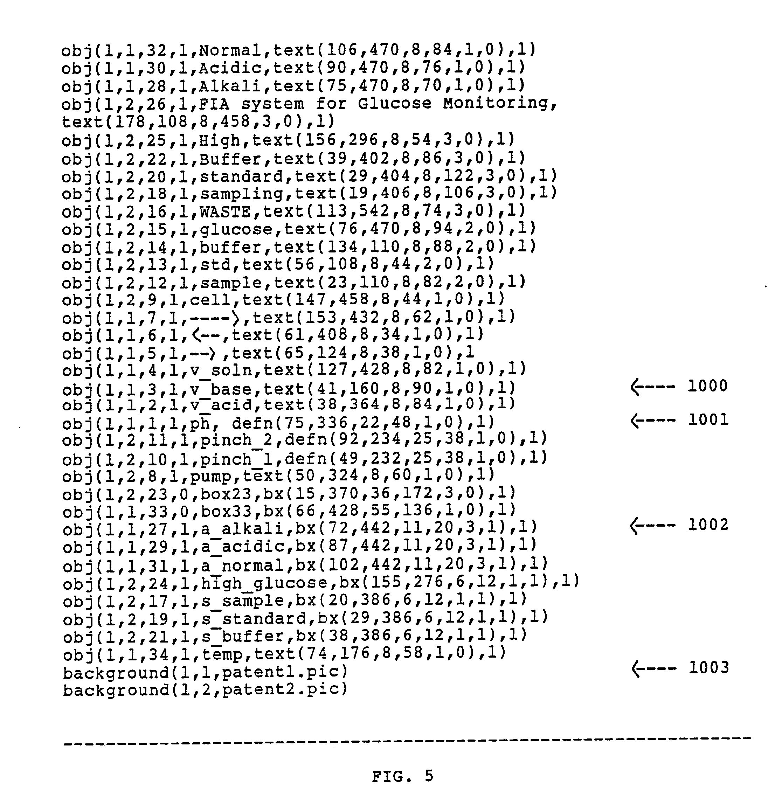

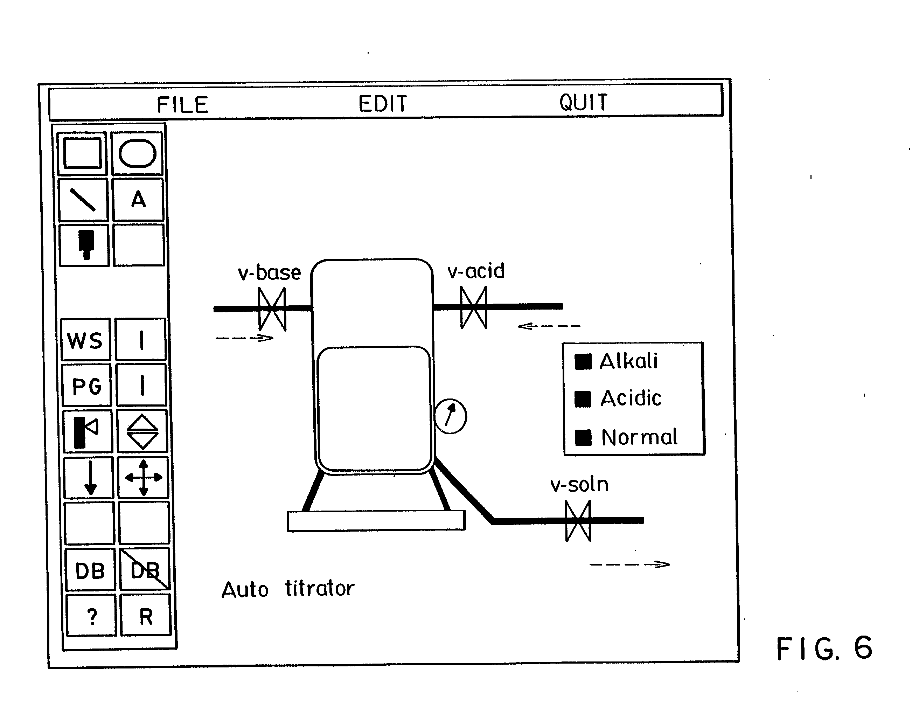

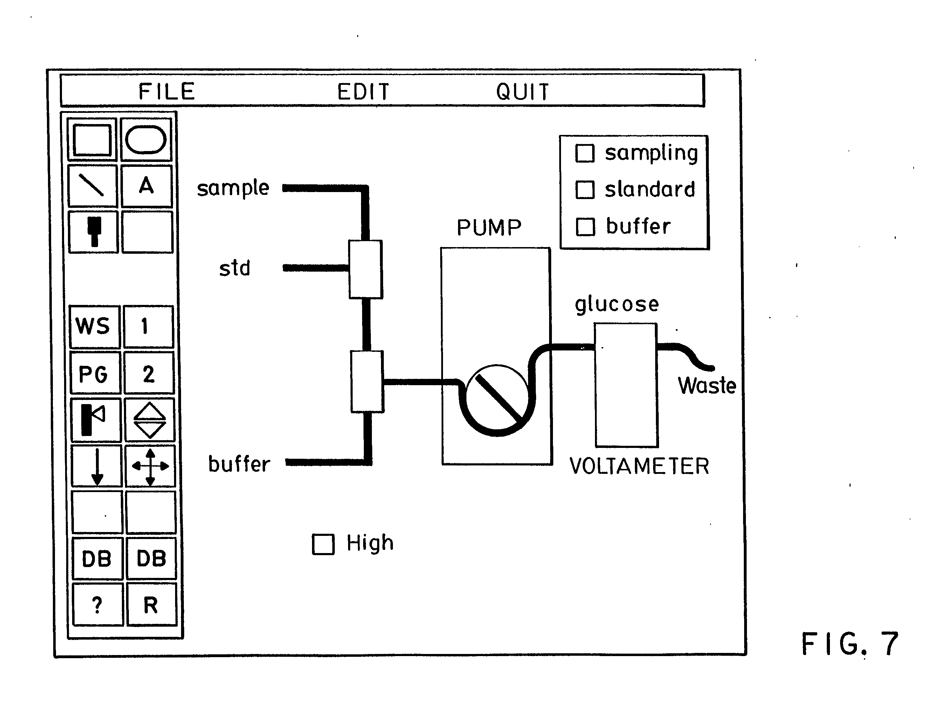

Reference is next made to Fig. 5 which is a table listing database predicates that implement the process schematics to be described with reference to Figs. 6 and 7. Data line 1000 expresses the structure of an icon used to represent a solenoid valve for acid addition and line 1001 expresses the structure of the icon used to represent a pH meter. Data line 1002 expresses the structure of an icon used to represent a screen based alarm and line 1003 expresses the structure for bit-mapped background imaging used in the window. Similar statements can be used to identify the spectrometer, autotitrator, etc.

Examples of typical windows are shown in Figs. 6 and 7. Fig. 6 represents an autotitrator and Fig. 7 a voltameter and pump arrangement. It will be seen in Fig. 6 that the windows identified by work station 1 and page number 1 were initial to the work to be done on the window using the keyboard or mouse as required. Once the window has been manipulated into a file for use in the system, it will be given a discreet file number for further reference. This basic window is available to all of the work stations for use to develop situations to be placed in the memory under the file number.

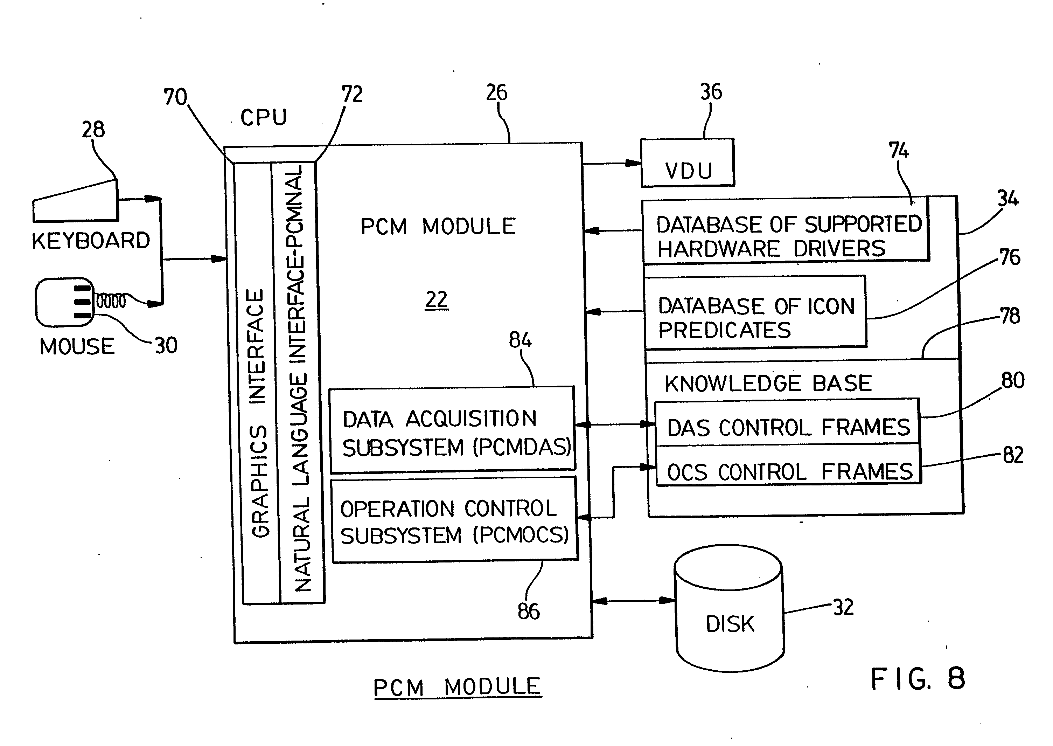

Reference is now made to Fig. 8 which illustrates in more detail the PCM. The front end of the module is a graphics interface 70 which allows the selection of icons for configuration, and a natural language interface (NAL) which , because of its association with the PCM module, is designated PCMNAL. The NAL is an English language parsing sub-routine.

Once the icons have been linked to the interface, the user can input heuristics using PCMNAL 72 and relating to the control of the icons. The natural language interface also checks the validity of the heuristics.

The PCM is supported from the memory 34 by a database of supported hardware drivers 74, a database of icon predicates 76, and a knowledge base 78 which includes a data acquisition sub-system (DAS) control frames 80 and control frames 82 for the operation control sub-system (OCS). The control frames 80, 82 relate directly to a data acquisition sub-system (PCMDAS) 84 in the PCM module 22 and to an operation control sub-system (PCMOCS) 86. The hardware drivers 74 are preferably written in Prolog but could also be in Assembly language, and direct the actual control of external instruments that are connected to the PC. Instruments can be connected through the data logger 54 (Fig. 2), serial port or other connecting devices using the bus of the micro computer. Also, the hardware drivers can either be input drivers or output drivers. Input drivers are employed for data acquisition and output drivers are for control purposes. Thus in configuring the hardware linkages both the input controls and the output controls have to be declared.

The sub-system PCMDAS is one of two sub-systems of the PCM. It is responsible for configuring data acquisition requirements of the process as well as linking the particular icon representing the input device. The other sub-system, PCMOCS is similarly responsible for configuring the output control requirements of the process and linking the icon representing the output device. Both the PCMDAS and PCMOCS configure the input and output configurations and linking functions by creating frames that are stored in the knowledge base 78.

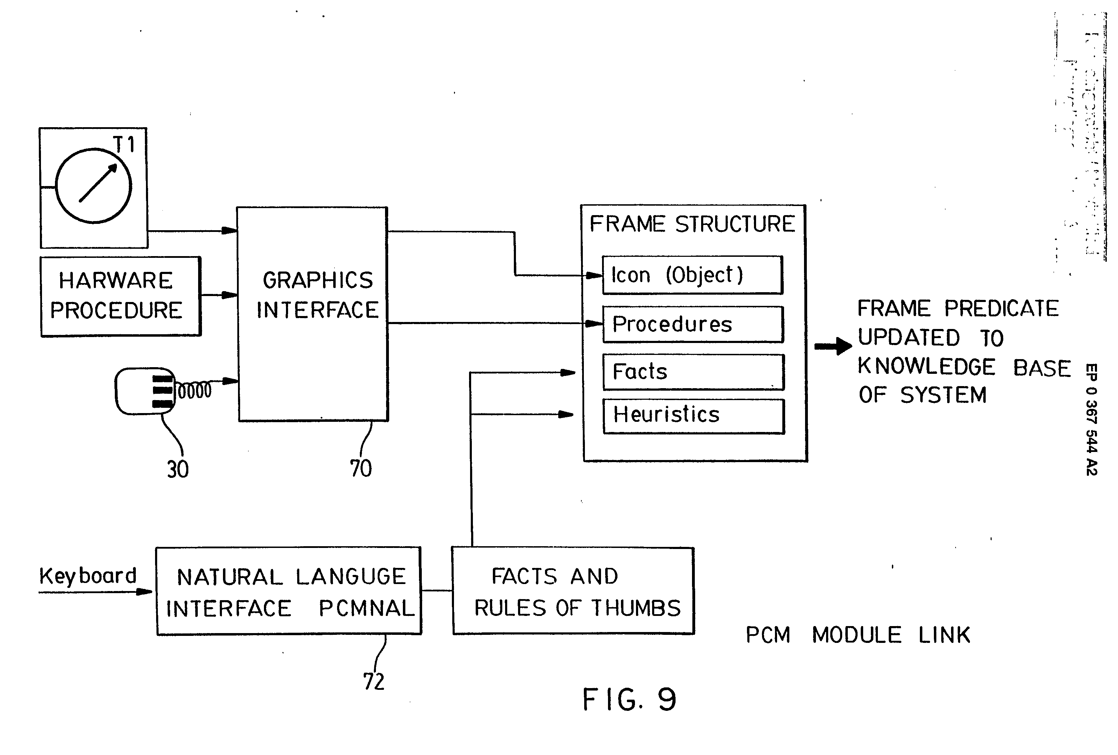

The procedure for the creation of a data acquisition frame using the PCMDAS is illustrated in Fig. 9. An empty frame structure is first created and then using the graphics and any interfaces, the various slots are filled with the following details.

(a) Particulars of the input device icon, eg. analog-digital channel.

(b) Procedures relating to the input device. This would be the name of one or more sub-routines written in Prolog or Assembly language which actually directs the operation of the external devices.

(c) Facts and heuristics relating to the operation of the input device. These determine when and how the external devices should be used. Once this frame has been completed it is asserted in the knowledge base, similarly the PCMOCS functions in the same way to configure frames for control or output devices. The general structure of frames implemented in Turbo Prolog is as follows.

Domains

```
procname, subject, name, equation, variable = string
ws, page, r, c, color, fill, sequence, layer, ind =
integer
drawing = p(r,c);
drawings = drawing*
type = bx(r,c,r,c,fill,color);
defn(r,c,r,c,fill,color);
ruler(r,c,r,c,fill,color);
text(r,c,r,c,fill,color);
pen(r,c,r,c,fill,color,drawings);
polygon(r,c,r,c,fill,color,drawings);
parameter = n(string,string); v(string,real); c(real,real,real)
paralist = parameter*
cond = string
conds = cond*
procedure = proc(procname,subject,paralist);
noproc
procedures = procedure*
ifthen = ifthen(procedures,conds)
object = object(page,type); noobject
seq
seq(ch0,ch1,ch2,ch3,duration,variable,variable)
seqlist = seq*
seqlen, st, ind, ch0, ch1, ch2, ch3 = integer
timer = t(integer,integer,integer,integer)
```

Database

```
dasframe(ws,sequence,name,object,ifthen,status)
ocsframe(ws,sequence,name,object,ifthen,status)
assign(variable,equation)
marker(sequence,name,timer,seqlen,seqlist,st,ind)
override(ind)
```

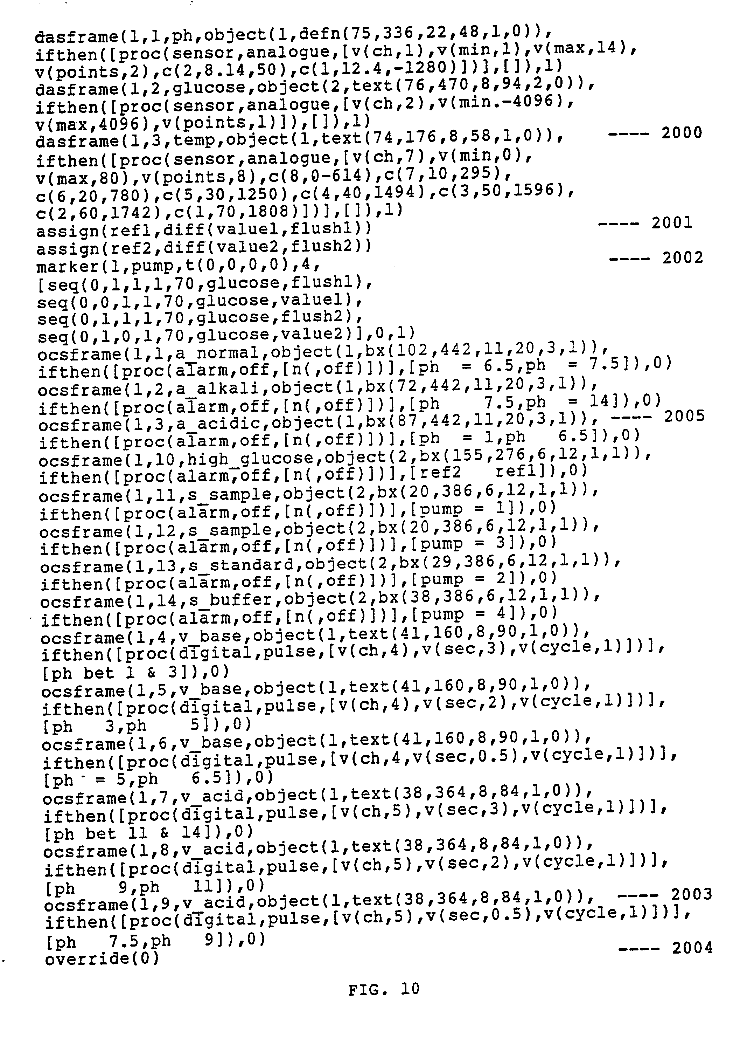

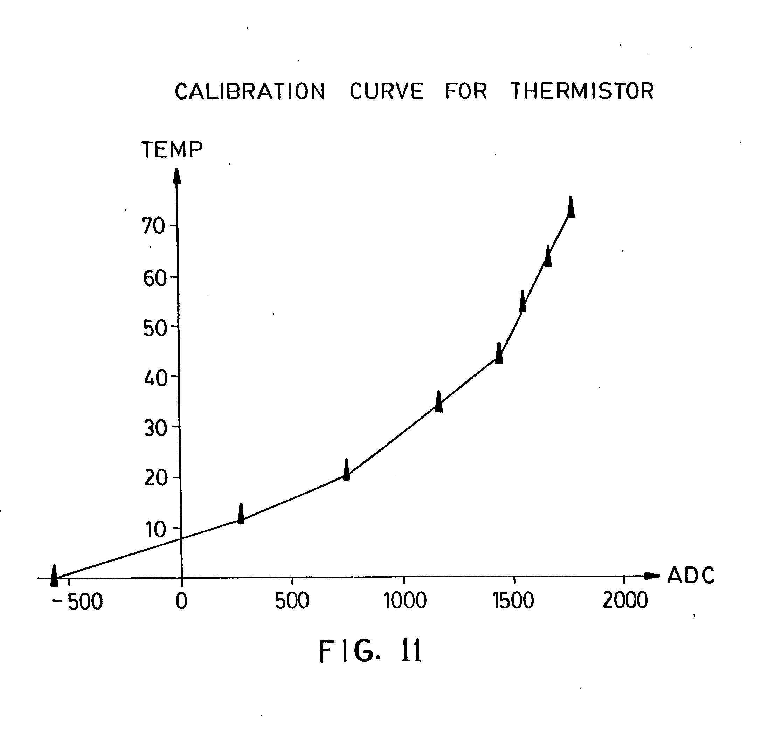

An example of a listing of frames created in the database using the PCM module for monitoring and control of pH, temperature and glucose level is given in Fig. 10. Line 2000 is a control frame for a thermistor and in this example eight calibration points are used to characterise the response of the thermistor. These calibration points are included as attributes of the sensor in the frame. Figure 11 shows a calibration plot for the thermistor. The ability to accommodate non-linear calibrations in this way is a major advantage.

Line 2001 of Fig. 10 is a predicate which enables the arithmetic computation. In this case the variable "ref1" is expressed as "ref1" = difference of "value1" and "flush1". Line 2002 is a predicate for control sequencing of the flow injection analyser and line 2003 is the control frame for the acid solenoid valve, which will be actuated if the conditions "pH > 7.5" and "ph < 9" are fulfilled.

Returning to Fig. 9, the PCMNAL 72 is an English like parsing routine which checks the validity of the English conditions statements such as "pH 7.5" to see that it conforms to the permitted language syntax. After declaring the control rules of the process the knowledge base of the PCM module can be saved into the disk 32 (Fig. 2) for retrieval and updating as required.

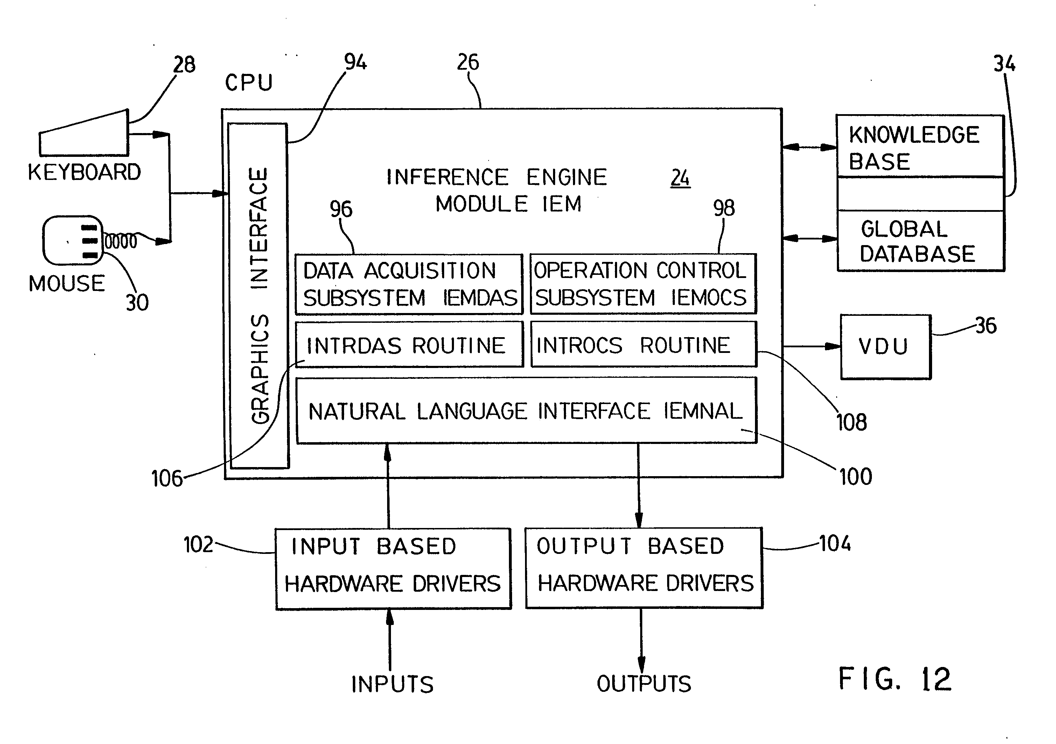

The schematics and the control frames have now been completed and the next phase is to run the process using the inference engine. Reference is now made to Fig. 12 which illustrates the inference engine module 24 which includes a graphics interface 94 coupled to the keyboard 28 and mouse 30, for manipulation of icons, a data acquisition subsystem 96 (IEMDES) for data acquisition and an operation control subsystem 98 (IEMOSC) for operation control purposes.

The graphics interface is a subset of the CAD graphics interface and allows paging of windows so that the user can see multiple windows. In the inference engine, the graphics interface provides access to the data acquisition subsystem 96 (IEMDAS) and to the control subsystem 98 (IEMOCS). Through the graphics interface the user can query the execution of controls performed by the control subsystem 98 and obtain an explanation of why those controls are executed. Plots, trends, bar charts and profile of data points of input sensors acquired by the data acquisition subsystem 96 can be requested and displayed dynamically on the VDU screen 36. Further, the user can have access to the data points of remote work stations as well as changing to the appropriate window using the mouse.

Apart from rule interpretation, the subsystems 96 and 98 also control data acquisition and process control respectively. The slots of the control frames contain structural, attributive, procedural and heuristics data. Once a natural language interface 100 (IEMNAL) determines that the heuristics or firing conditions of the frames are true, it causes a procedural subroutine that executes the necessary control sequence as specified in the procedural slot of the frame. These control sequences are executed using input based hardware drivers 102 and output based hardware drivers 104.

The function of the inference engine can be defined as (a) inference, ie directing and unifiction of rules and (b) control, ie determining the order in which rules are tested and consequences when a rule succeeds or fails. The inference engine for the present invention employs a general control strategy given by the following Prolog statements:

```
inference_engine(LocalWS):-
      repeat,
      graphics_interface,        < ----------3000
      iedas(LocalWS),            <-----------3001
      ieocs(LocalWS),            <-----------3002
      fail.




   iedas(LocalWS):-                            <-----------3003
         dasframe(LocalWS,_,NAME, OBJ,IFTHEN,1),
         IFTHEN = ifthen(Procedures, Conds),
         check_heuristics(Conds),
         subr_das(NAME, OBJ, Procedures), fail.
   iedas(_):-!.

   ieocs(LocalWS):-                            <-----------3004
         ocsframe(LocalWS,_,NAME, OBJ, IFTHEN,St),
         IFTHEN = ifthen(Procedures, Conds),
         check_heuristics(Conds),
         subr_ocs(Name, Obj, Procedures), fail.
   ieocs (_):-!.
```

Data 3000 is the meta rule for the inference engine graphics interface(91).

Data 3001 is the meta rule relating to the operation of the IEDAS [92]. When bound control will be passed to predicate 3003.

Data 3002 is the meta rule relating to the operation of the IEOCS [93]. When bound it will pass control to predicate 3004.

These meta rules control the search of the frames in the knowledge base.

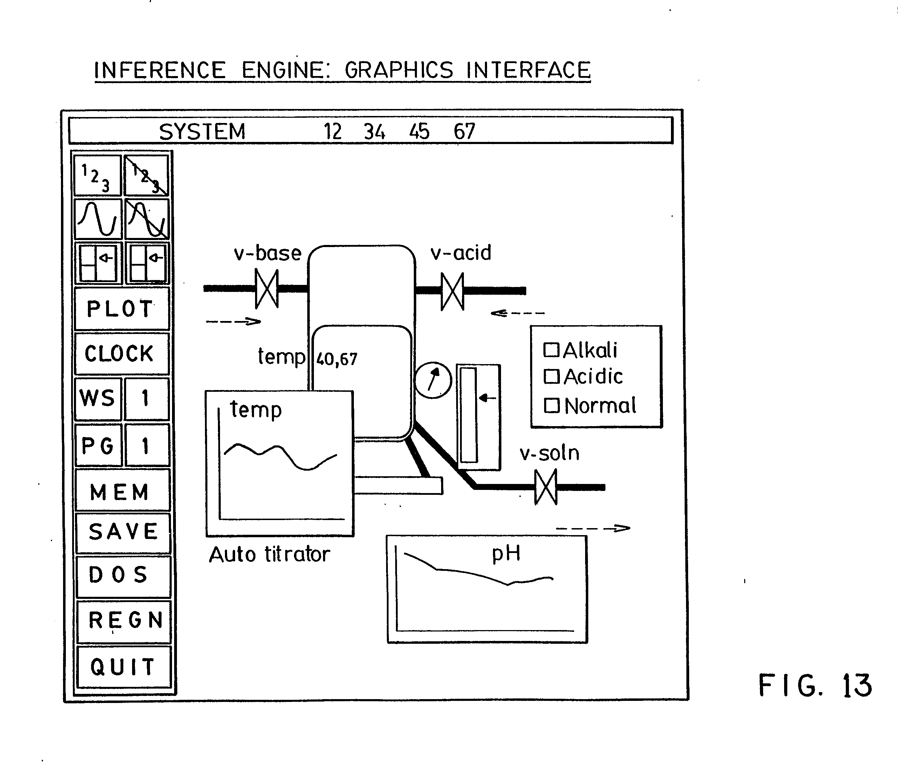

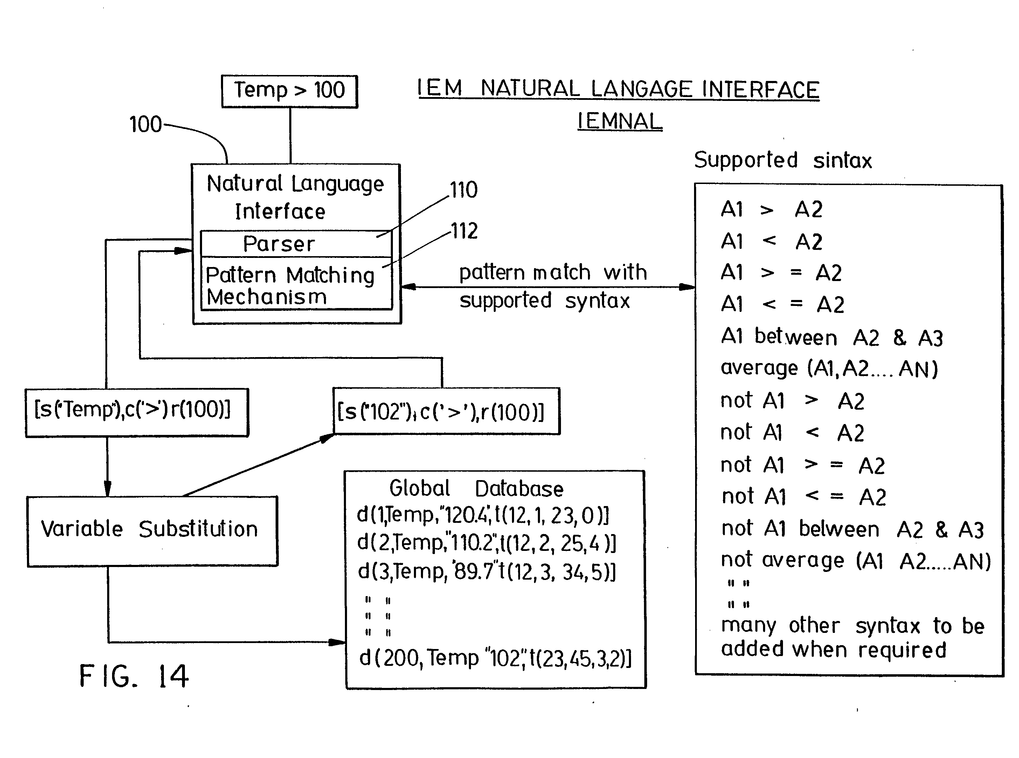

Fig. 13 illustrates the display functions of the IEM graphics interface. Interrupts are incorporated in the graphics interface to enable manual overriding of the IEMDAS and IEMOCS operations. As seen in Fig. 12, interrupt routines INTREAS 106 and INTRECS 108 are provided. These interrupt routines are administered using the graphics interface and by such use the user is able to take control. The natural language interface IEMNAL is illustrated in more detail in Fig. 14. The interface includes an English language parser 110 and pattern matcher 112 that allows the data acquisition subsystem 96 (Fig. 12) and the operation control subsystem 98 to analysis and understand "English-like" control heuristics of the data acquisition subsystem frame and the operation subsystem frame predicts for example, "pH > 7.5". The IEMNAL passes each sentence and converts its meaning into tokens. It then substitutes variable tokens with real values from a global database. The validity of the control heuristics are then determined by pattern matching.

It is desirable in the early stages of designing a process control system that a control model be constructed to study the behaviour of the system so that any inconsistency regarding control procedures can be studied and rectified at this initial stage with minimal disruptions. This effectively is a teaching function and the system can be used in this way.

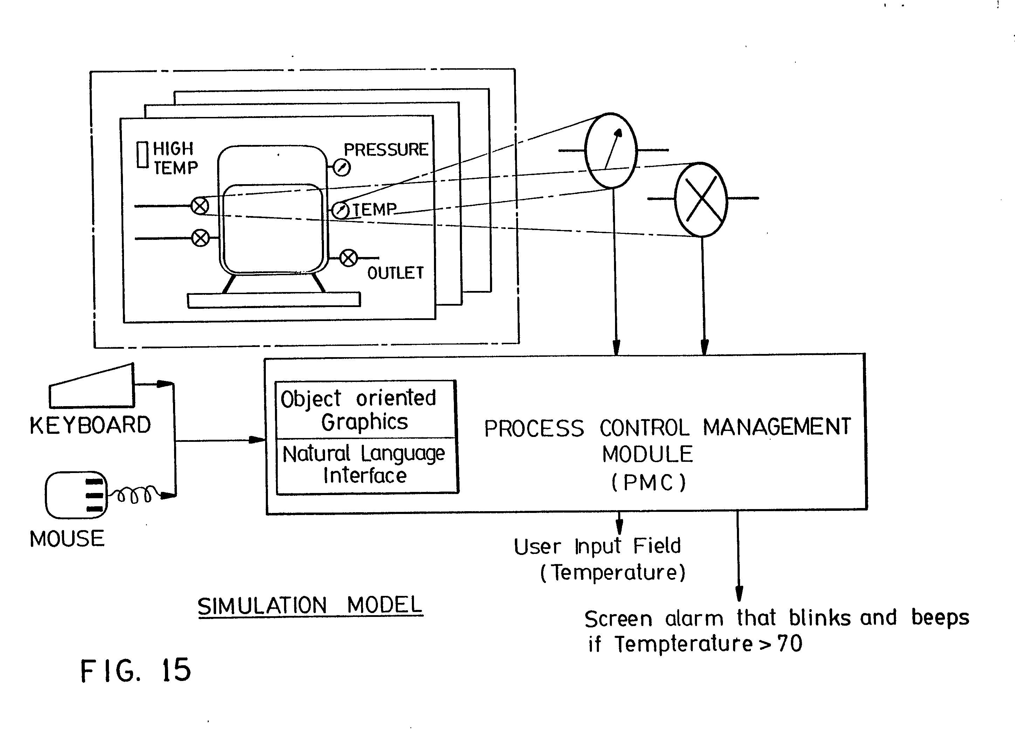

Fig. 15 illustrates the steps in designing a simulated process control model using the PCM module with input and output active elements of the process being substituted with icons. Data acquisition elements can be configured as user input fields who's values will be manually altered by the user and external control modes like valves and motors can be simulated using screen based alarms. Control procedures can than be studied and modified by changing the input values and manually be observing the screen based alarms for changes.

Once the screen based model is tested and ready for field trials, the screen based icons are replaced by the active elements of the process. This involves changing the screen based input fields to physical input channels and changing the screen based alarms to physical output channels for controlling external actuators. The switch over is achieved by changing the attributive and procedural information of the control rules because the heuristics regarding firing conditions remains the same. The following example demonstrates two applications that are run simultaneously. The first application is an autotitrator shown previously in Fig. 6 which has the function of monitoring and controlling the pH at a fixed point by adding acid or base depending on the process conditions.

The second application is the system for monitoring glucose levels in a process in Fig. 7. Use is made in this process of a voltameter as the sensor input and the flow injection analyzer for regulating the flow of sample and standards. The voltameter detects the sample alternately and thereby compensates for any sensor deterioration.

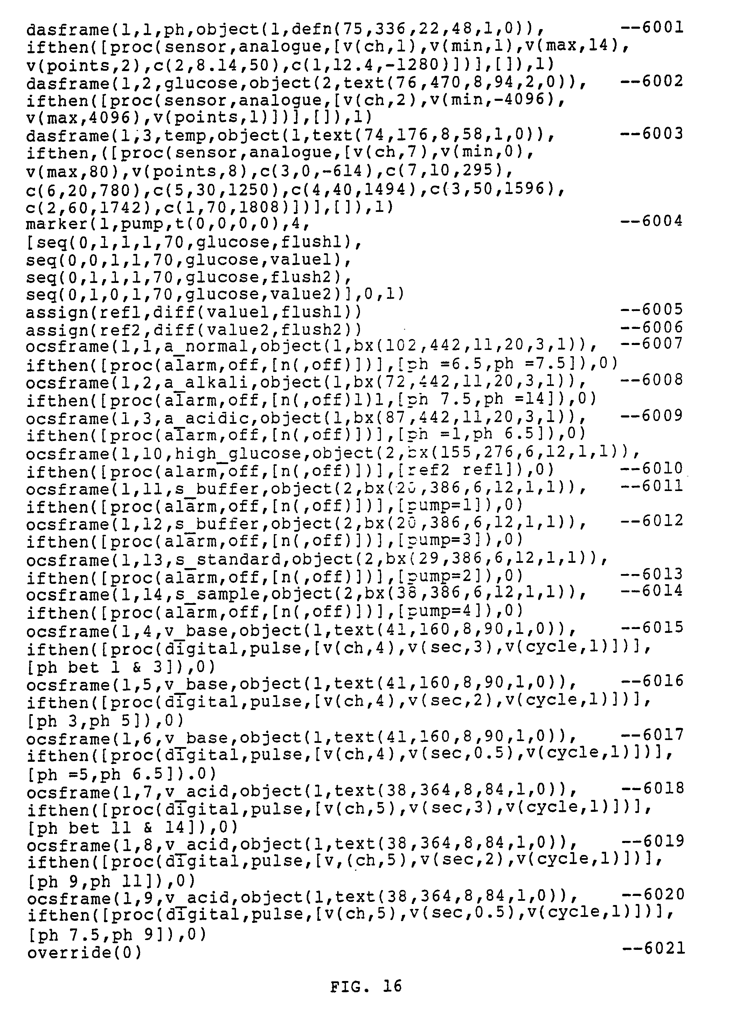

Fig. 16 lists the knowledge base for both applications. Essentially the knowledge base contains control frames relating to the monitoring and control of pH, temperature and glucose levels. Data acquisition control rules are lines 6001-6006.

Data 6001, describes the use of a pH sensor with the following characterists.

Icon: pH - object (1,defn(75,336,22,48,1,0)

Procedure: sensor analog

Procedure attributes:

Analog channel: 1

Min range: 1

Max range: 14

Calibration points: 2

pH: 8.14 = 50 mV

pH: 12.4, = -1280 mV

Data 6002, describes the use of a glucose sensor with the following characteristics.

Icon: glucose - text(76,470,8,94,2,0)

Procedure: sensor analog

Procedure attributes:

Analog channel: 2

Min range : -4096

Max range : 4096

Calibration points: 1

Data 6003, describes the use of a thermistor with the following characteristics.

Icon: temp - text(74,176,8,58,1,0)

Procedure: sensor temp

Procedure attributes:

Analog channel: 7

Min range : 0

Max range : 80

Calibration points: 8

temp 0 = -614 mV

temp 10 = 295 mV

temp 20 = 780 mV

temp 30 = 1250 mV

temp 40 = 1494 mV

temp 50 = 1596 mV

temp 60 = 1742 mV

temp 70 = 1808 mV

When the inference engine processes these frames it will sample the sensor values using the analog-digital-converter through the appropriate channels and convert the voltage values into values based on the calibration points. The data points are then updated to the database. A sample of pH data value is as follows.

```
data(1,pH,6.78,t(6,7,45,56))
      :  :   :           :
      :  :  value   time  =  6:7:45:56
      :  icon name
      :
counter reference
```

Data 6004 is a sequence control frame for controlling the sequencing of the flow injection analyser.

```
        Icon: pump
        Logon Time : 0:0:0:0        <-- 6031
        Number of sequence: 4
        Status: 1                   <-- 6030
        Sequence name    10 settings           Logon
                         CH0   CH1   CH2   CH3   Dur.
   Sensor

        -------------    ------------------    -----
    ------
                flushl    0     1     1     1     70
   glucose
                value1    0     0     1     1     70    " "
                flush2    0     1     1     1     70    " "
                Value2    0     1     0     1     70    " "
```

The inference engine processes frame 6004 and executes the necessary control sequence to operate the flow injection analyser. The status indicator [6030] and the logon time [6031] shows the present sequence status of the analyser and the time in which the sequence is activated.

Data 6005 and 6006 are mathematical assignment statements that are processed by the inference engine.

Data 6007 to 6009 describes the alarms for the pH monitoring.

Data 6007 will activate icon "a_normal", ie changing the color of the icon structure to the next in the pallette, if the heuristics are correct.

Icon: a_normal - bx(102,442,11,20,3,1)

Procedure: alarm off

If heuristics:

pH > =6.5

pH < = 7.5

Data 6008 will activate icon "a_alkali" if the heuristics are correct.

Icon: a_alkali - bx(72,442,11,20,3,1)

Procedure: alarm off

If heuristics:

pH > 7.5

pH < = 14

Data 6009 will activate icon "a_acidic" if the heuristics are correct.

Icon: a_acidic = bx(87,442,11,20,3,1)

Procedure: alarm off

If heuristics:

pH > = 1

pH < 6.5

Data 6010 describes the alarm for the glucose monitoring.

Data 6010 will activate icon "high_glucose" if the heuristics are correct.

Icon: high_glucose - bx(155,276,6,12,1,1)

Procedure: alarm off

If heuristics: ref2 > ref1

Data 6011 to 6014 describes the alarms for monitoring the sequence of the analyser.

Data 6011 will activate icon "s_buffer" if the heuristics are correct.

Icon: s_buffer - bx(20,386,6,12,1,1)

Procedure: alarm off

If heuristics: pump = 1

Data 6012 will activate icon "s_buffer" if the heuristics are correct.

Icon: s_buffer - bx(20,386,6,12,1,1)

Procedure: alarm off

If heuristics: pump = 3

Data 6013 will activate icon "s_standard" if the heuristics are correct.

Icon: s_standard - bx(29,386,6,12,1,1)

Procedure: alarm off

If heuristics: pump = 2

Data 6014 will activate icon "s_sample" if the heuristcs are correct.

Icon: s_sample - bx(38,386,6,12,1,1)

Procedure: alarm off

If heuristics: pump = 4

Data 6015 to 6017 describes the addition rate of alkali using the solenoid valve "v_base".

Data 6015 will activate icon "v_base" if the heuristics are correct.

Icon: v_base - text(41,160,8,90,1,0)

Procedure: digital pulse

Attributes:

channel = 4

pulse duration = 3

number of cycle = 1

If heuristics: pH bet 1 & 3

Data 6016 will activate icon "v_base" if the heuristics are correct.

Icon: v_base - text(41,160,8,90,1,0)

Procedure: digital pulse

Attributes:

```
channel = 4
pulse duration = 2
number of cycle = 1
If heuristics:
pH > 3
pH < 5
Data 6017 will activate icon "v__base" if the heuristics are correct.
Icon: v__base - text(41,160,8,90,1,0)
Procedure: digital pulse
Attributes:
channel = 4
pulse duration = 0.5
number of cycle = 1
If heuristics:
pH > = 5
pH < 6.5
Data 6018 to 6020 describes the addition rate of alkali using the solenoid valve "v__acid".
Data 6018 will activate icon "v__acid" if the heuristics are correct.
Icon: v__acid - text (38,364,8,84,1,0)
Procedure: digital pulse
Attributes:
channel = 5
pulse duration = 3
number of cycle = 1
If heuristcs: pH bet 11 & 14
Data 6019 will activate icon "v__acid" if the heuristics are correct.
Icon: v__acid - text(38,364,8,84,1,0)
Procedure: digital pulse
Attributes:
channel = 5
pulse duration = 2
number of cycle = 1
If heuristcs:
pH > 9
pH < 11
Data 6020 will active icon "v__acid" if the heuristics are correct.
Icon: c__acid - text(38,364,8,84,1,0)
Procedure: digital pulse
Attributes:
channel = 5
pulse duration = 0.5
number of cycle = 1
If heuristics:
pH > 7.5
pH < 9
```

In summary, there has been disclosed new and approved methods and apparatus for monitoring and control that can be applied to laboratory and industrial process applications. A feature is the integration of expert systems capability with a graphics design package and instrument control, and the possibility of using Prolog in a frame representation scheme.

## Claims

1. A method of designing a monitoring and control system for laboratory and industrial process applications comprising the steps of:
specifying the instruments and controllers used for monitoring and control using a graphics and natural language interface,
linking the graphical description of the instruments and controllers to the external instruments and controllers through an electronic interface,

building an expert system knowledge base for supervising the control of the process or laboratory experiment,

defining the inference engine which actually runs the process or experiment, and

using the graphics and natural language interface to query the system in real time.

2. The method of claim 1 on which the graphics and natural language interface is in Prolog.

3. The method of claim 2 wherein the graphics include ICONS and the functional characteristics of the ICONS include procedures written in a procedural language such as C or assembly language.

4. The method of claim 1 wherein a window facility is used to draw variants of the process or laboratory experiment schematics.

5. The method of claim 2 in which the interface permits constructing the elements of the process or laboratory control system by specifying the functional characteristics of the elements without setting out the order in which they are to be used, the order of operation is being automatically inferred by the inference engine.

6. The method of claim 5 in which the inference engine is programmed in Prolog.

7. The method of claim 1 wherein the interface permits the user to specify the functional characteristics of the process control elements using the graphics and natural language interface via a mouse and keyboard respectively.

8. The method of claim 1 wherein the linking between the graphics and the external instruments and controllers is implemented using a frame structure.

9. The method of claim 8 wherein Prolog is used to implement the frame structure.

10. The method of claim 1 wherein the inference engine is defined into a first part which enables the monitoring of processes and instruments, and a second part dealing with the control of the process or instruments.

11. The method of claim 10 wherein the inference engine is implemented in Prolog.

12. The method of claim 1 wherein the expert system knowledge base uses expert knowledge in the form of heuristics to make control decisions based on data input from the laboratory experiment or process.

13. The method of claim 12 wherein the user is able to modify the knowledge base of the expert system by adding and deleting Prolog facts and predicates using the graphics and natural language interface.

14. Apparatus for designing a monitoring and control system for laboratory and industrial processes comprising:

instruments and controllers positioned in the process for reading and controlling process data;

a graphics and natural language interface for specifying the instruments and controllers used for monitoring and control;

an electronic interface linking the graphical description of the instruments and controllers to the external instruments and controllers;

an expert system knowledge base for supervising the control of the process or laboratory experiment;

an inference engine which actually runs the process or experiment; and

the graphics and natural interface including means to query the system in real time.

15. Apparatus as claimed in claim 14 in which the graphics and natural language interface is in Prolog.

16. Apparatus as claimed in claim 15 wherein the graphics include ICONS and the functional characteristics of the ICONS include procedures written in a procedural language such as C or assembly language.

# SOFTWARE CONFIGURATION

FIG. 1

EP 0 367 544 A2

FIG. 2

HARDWARE

VDU — 36

PRINTER — 38

SERIAL — 40

NETWORK INTERFACE CARD — 42

DISTRIBUTED NETWORK

KEYBOARD

26

28

MOUSE

CPU

30  32

DISK

MEMORY

34

44

NETWORK INTERFACE CARD

VOLTOMETER — 46

48

FLOW INJECTION ANALIZER

AUTOTITRATOR — 50

56  58

SPECTROMETER — 52

ADC

DAC

54

62  60

DATA LOGGER

DIGITAL I/O

INTERRUPT I/O

FIG. 3

VDU 36

64 LIBRARY OF GRAPHICAL ICONS

34 CAD DATABASE

66

32 DISK

26 CPU — CAD MODULE 20

GRAPHICS INTERFACE 68

CAD MODULE

28 KEYBOARD

MOUSE 30

FIG. 4

OTHERS WORKSTATIONS

W 1

W 2

36

36

FILE     EDIT     QUIT

T2   100
P1   500
NORMAL

T2
P1
V1
V2
PG   2
W   3

FILE     EDIT     QUIT

T2 > 100
P1 > 500
NORMAL

T2
P1
V1
V2
PG   2
W   3

EP 0 367 544 A2

```
obj(1,1,32,1,Normal,text(106,470,8,84,1,0),1)
obj(1,1,30,1,Acidic,text(90,470,8,76,1,0),1)
obj(1,1,28,1,Alkali,text(75,470,8,70,1,0),1)
obj(1,2,26,1,FIA system for Glucose Monitoring,
text(178,108,8,458,3,0),1)
obj(1,2,25,1,High,text(156,296,8,54,3,0),1)
obj(1,2,22,1,Buffer,text(39,402,8,86,3,0),1)
obj(1,2,20,1,standard,text(29,404,8,122,3,0),1)
obj(1,2,18,1,sampling,text(19,406,8,106,3,0),1)
obj(1,2,16,1,WASTE,text(113,542,8,74,3,0),1)
obj(1,2,15,1,glucose,text(76,470,8,94,2,0),1)
obj(1,2,14,1,buffer,text(134,110,8,88,2,0),1)
obj(1,2,13,1,std,text(56,108,8,44,2,0),1)
obj(1,2,12,1,sample,text(23,110,8,82,2,0),1)
obj(1,2,9,1,cell,text(147,458,8,44,1,0),1)
obj(1,1,7,1,---->,text(153,432,8,62,1,0),1)
obj(1,1,6,1,<--,text(61,408,8,34,1,0),1)
obj(1,1,5,1,-->,text(65,124,8,38,1,0),1
obj(1,1,4,1,v_soln,text(127,428,8,82,1,0),1)
obj(1,1,3,1,v_base,text(41,160,8,90,1,0),1)      <---- 1000
obj(1,1,2,1,v_acid,text(38,364,8,84,1,0),1)
obj(1,1,1,1,ph, defn(75,336,22,48,1,0),1)         <---- 1001
obj(1,2,11,1,pinch_2,defn(92,234,25,38,1,0),1)
obj(1,2,10,1,pinch_1,defn(49,232,25,38,1,0),1)
obj(1,2,8,1,pump,text(50,324,8,60,1,0),1)
obj(1,2,23,0,box23,bx(15,370,36,172,3,0),1)
obj(1,1,33,0,box33,bx(66,428,55,136,1,0),1)
obj(1,1,27,1,a_alkali,bx(72,442,11,20,3,1),1)     <---- 1002
obj(1,1,29,1,a_acidic,bx(87,442,11,20,3,1),1)
obj(1,1,31,1,a_normal,bx(102,442,11,20,3,1),1)
obj(1,2,24,1,high_glucose,bx(155,276,6,12,1,1),1)
obj(1,2,17,1,s_sample,bx(20,386,6,12,1,1),1)
obj(1,2,19,1,s_standard,bx(29,386,6,12,1,1),1)
obj(1,2,21,1,s_buffer,bx(38,386,6,12,1,1),1)
obj(1,1,34,1,temp,text(74,176,8,58,1,0),1)
background(1,1,patent1.pic)                        <---- 1003
background(1,2,patent2.pic)
```

-----------------------------------------------------------------

FIG. 5

Auto titrator

FIG. 6

EP 0 367 544 A2

FIG. 7

**PCM MODULE**

FIG. 8

EP 0 367 544 A2

FIG. 9

PCM MODULE LINK

FRAME STRUCTURE

Icon (Object)

Procedures

Facts

Heuristics

HARWARE PROCEDURE

GRAPHICS INTERFACE

30

70

Keyboard

NATURAL LANGUGE INTERFACE PCMNAL

72

FACTS AND RULES OF THUMBS

FRAME PREDICATE UPDATED TO KNOWLEDGE BASE OF SYSTEM

EP 0 367 544 A2

```
dasframe(1,1,ph,object(1,defn(75,336,22,48,1,0)),
ifthen([proc(sensor,analogue,[v(ch,1),v(min,1),v(max,14),
v(points,2),c(2,8.14,50),c(1,12.4,-1280)])],[]),1)
dasframe(1,2,glucose,object(2,text(76,470,8,94,2,0)),
ifthen([proc(sensor,analogue,[v(ch,2),v(min.-4096),
v(max,4096),v(points,1)])],[]),1)
dasframe(1,3,temp,object(1,text(74,176,8,58,1,0)),          ---- 2000
ifthen([proc(sensor,analogue,[v(ch,7),v(min,0),
v(max,80),v(points,8),c(8,0-614),c(7,10,295),
c(6,20,780),c(5,30,1250),c(4,40,1494),c(3,50,1596),
c(2,60,1742),c(1,70,1808)])],[]),1)
assign(ref1,diff(value1,flush1))                            ---- 2001
assign(ref2,diff(value2,flush2))
marker(1,pump,t(0,0,0,0),4,                                 ---- 2002
[seq(0,1,1,1,70,glucose,flush1),
seq(0,0,1,1,70,glucose,value1),
seq(0,1,1,1,70,glucose,flush2),
seq(0,1,0,1,70,glucose,value2)],0,1)
ocsframe(1,1,a_normal,object(1,bx(102,442,11,20,3,1)),
ifthen([proc(alarm,off,[n(,off)])],[ph  = 6.5,ph  = 7.5]),0)
ocsframe(1,2,a_alkali,object(1,bx(72,442,11,20,3,1)),
ifthen([proc(alarm,off,[n(,off)])],[ph    7.5,ph = 14]),0)
ocsframe(1,3,a_acidic,object(1,bx(87,442,11,20,3,1)),  ---- 2005
ifthen([proc(alarm,off,[n(,off)])],[ph = 1,ph   6.5]),0)
ocsframe(1,10,high_glucose,object(2,bx(155,276,6,12,1,1)),
ifthen([proc(alarm,off,[n(,off)])],[ref2   ref1]),0)
ocsframe(1,11,s_sample,object(2,bx(20,386,6,12,1,1)),
ifthen([proc(alarm,off,[n(,off)])],[pump = 1]),0)
ocsframe(1,12,s_sample,object(2,bx(20,386,6,12,1,1)),
ifthen([proc(alarm,off,[n(,off)])],[pump = 3]),0)
ocsframe(1,13,s_standard,object(2,bx(29,386,6,12,1,1)),
ifthen([proc(alarm,off,[n(,off)])],[pump = 2]),0)
ocsframe(1,14,s_buffer,object(2,bx(38,386,6,12,1,1)),
ifthen([proc(alarm,off,[n(,off)])],[pump = 4]),0)
ocsframe(1,4,v_base,object(1,text(41,160,8,90,1,0)),
ifthen([proc(digital,pulse,[v(ch,4),v(sec,3),v(cycle,1)])],
[ph bet 1 & 3]),0)
ocsframe(1,5,v_base,object(1,text(41,160,8,90,1,0)),
ifthen([proc(digital,pulse,[v(ch,4),v(sec,2),v(cycle,1)])],
[ph   3,ph    5]),0)
ocsframe(1,6,v_base,object(1,text(41,160,8,90,1,0)),
ifthen([proc(digital,pulse,[v(ch,4,v(sec,0.5),v(cycle,1)])],
[ph  = 5,ph   6.5]),0)
ocsframe(1,7,v_acid,object(1,text(38,364,8,84,1,0)),
ifthen([proc(digital,pulse,[v(ch,5),v(sec,3),v(cycle,1)])],
[ph bet 11 & 14]),0)
ocsframe(1,8,v_acid,object(1,text(38,364,8,84,1,0)),
ifthen([proc(digital,pulse,[v(ch,5),v(sec,2),v(cycle,1)])],
[ph    9,ph   11]),0)
ocsframe(1,9,v_acid,object(1,text(38,364,8,84,1,0)),  ---- 2003
ifthen([proc(digital,pulse,[v(ch,5),v(sec,0.5),v(cycle,1)])],
[ph   7.5,ph    9]),0)
override(0)                                             ---- 2004
```

FIG. 10

CALIBRATION CURVE FOR THERMISTOR

FIG. 11

EP 0 367 544 A2

FIG. 12

EP 0 367 544 A2

# INFERENCE ENGINE: GRAPHICS INTERFACE

FIG. 13

EP 0 367 544 A2

EP 0 367 544 A2

IEM NATURAL LANGAGE INTERFACE
IEMNAL

Temp > 100

100

Natural Language Interface — 110
Parser — 112
Pattern Matching Mechanism

pattern match with supported syntax

Supported sintax

A1 > A2
A1 < A2
A1 > = A2
A1 < = A2
A1 between A2 & A3
average (A1, A2.... AN)
not A1 > A2
not A1 < A2
not A1 > = A2
not A1 < = A2
not A1 between A2 & A3
not average (A1 A2.....AN)
" "
" "
many other syntax to be added when required

[s('Temp'),c('>')r(100)]

[s("102"),c('>'),r(100)]

Variable Substitution

Global Database
d(1,Temp,"120.4",t(12, 1, 23, 0)]
d(2,Temp,"110.2",t(12, 2, 25, 4)]
d(3,Temp, "89.7"t(12, 3, 34, 5)]
" "
" "
" "
d(200, Temp "102", t(23,45,3,2)]

FIG. 14

HIGH TEMP

PRESSURE

TEMP

OUTLET

KEYBOARD

MOUSE

Object oriented Graphics

Natural Language Interface

PROCESS CONTROL MANAGEMENT MODULE (PMC)

User Input Field (Temperature)

Screen alarm that blinks and beeps if Tempterature > 70

SIMULATION MODEL

FIG. 15

EP 0 367 544 A2

EP 0 367 544 A2

```
dasframe(1,1,ph,object(1,defn(75,336,22,48,1,0))),           --6001
ifthen([proc(sensor,analogue,[v(ch,1),v(min,1),v(max,14),
v(points,2),c(2,8.14,50),c(1,12.4,-1280)])])],[]),1)
dasframe(1,2,glucose,object(2,text(76,470,8,94,2,0))),        --6002
ifthen([proc(sensor,analogue,[v(ch,2),v(min,-4096),
v(max,4096),v(points,1)])])],[]),1)
dasframe(1,3,temp,object(1,text(74,176,8,58,1,0))),           --6003
ifthen,([proc(sensor,analogue,[v(ch,7),v(min,0),
v(max,80),v(points,8),c(3,0,-614),c(7,10,295),
c(6,20,780),c(5,30,1250),c(4,40,1494),c(3,50,1596),
c(2,60,1742),c(1,70,1808)])])],[]),1)
marker(1,pump,t(0,0,0,0),4,                                    --6004
[seq(0,1,1,1,70,glucose,flush1),
seq(0,0,1,1,70,glucose,value1),
seq(0,1,1,1,70,glucose,flush2),
seq(0,1,0,1,70,glucose,value2)],0,1)
assign(ref1,diff(value1,flush1))                              --6005
assign(ref2,diff(value2,flush2))                              --6006
ocsframe(1,1,a_normal,object(1,bx(102,442,11,20,3,1))),       --6007
ifthen([proc(alarm,off,[n(,off)])],[ph =6.5,ph =7.5]),0)
ocsframe(1,2,a_alkali,object(1,bx(72,442,11,20,3,1))),        --6008
ifthen([proc(alarm,off,[n(,off)]1],[ph 7.5,ph =14]),0)
ocsframe(1,3,a_acidic,object(1,bx(87,442,11,20,3,1))),        --6009
ifthen([proc(alarm,off,[n(,off)])],[ph =1,ph 6.5]),0)
ocsframe(1,10,high_glucose,object(2,bx(155,276,6,12,1,1))),
ifthen([proc(alarm,off,[n(,off)])],[ref2 ref1]),0)            --6010
ocsframe(1,11,s_buffer,object(2,bx(20,386,6,12,1,1))),        --6011
ifthen([proc(alarm,off,[n(,off)])],[pump=1]),0)
ocsframe(1,12,s_buffer,object(2,bx(20,386,6,12,1,1))),        --6012
ifthen([proc(alarm,off,[n(,off)])],[pump=3]),0)
ocsframe(1,13,s_standard,object(2,bx(29,386,6,12,1,1))),
ifthen([proc(alarm,off,[n(,off)])],[pump=2]),0)               --6013
ocsframe(1,14,s_sample,object(2,bx(38,386,6,12,1,1))),        --6014
ifthen([proc(alarm,off,[n(,off)])],[pump=4]),0)
ocsframe(1,4,v_base,object(1,text(41,160,8,90,1,0))),         --6015
ifthen([proc(digital,pulse,[v(ch,4),v(sec,3),v(cycle,1)])],
[ph bet 1 & 3]),0)
ocsframe(1,5,v_base,object(1,text(41,160,8,90,1,0))),         --6016
ifthen([proc(digital,pulse,[v(ch,4),v(sec,2),v(cycle,1)])],
[ph 3,ph 5]),0)
ocsframe(1,6,v_base,object(1,text(41,160,8,90,1,0))),         --6017
ifthen([proc(digital,pulse,[v(ch,4),v(sec,0.5),v(cycle,1)])],
[ph =5,ph 6.5]).0)
ocsframe(1,7,v_acid,object(1,text(38,364,8,84,1,0))),         --6018
ifthen([proc(digital,pulse,[v(ch,5),v(sec,3),v(cycle,1)])],
[ph bet 11 & 14]),0)
ocsframe(1,8,v_acid,object(1,text(38,364,8,84,1,0))),         --6019
ifthen([proc(digital,pulse,[v,(ch,5),v(sec,2),v(cycle,1)])],
[ph 9,ph 11]),0)
ocsframe(1,9,v_acid,object(1,text(38,364,8,84,1,0))),         --6020
ifthen([proc(digital,pulse,[v(ch,5),v(sec,0.5),v(cycle,1)])],
[ph 7.5,ph 9]),0)
override(0)                                                    --6021
```

FIG. 16